(19) **Europäisches Patentamt**

**European Patent Office**

**Office européen des brevets**

(11) **EP 1 336 140 B1**

(12) **EUROPEAN PATENT SPECIFICATION**

(45) Date of publication and mention
of the grant of the patent:
**22.02.2006 Bulletin 2006/08**

(51) Int Cl.:
*G06F 17/00* (2006.01)    *G10L 19/00* (2006.01)

(21) Application number: **01989842.8**

(22) Date of filing: **24.10.2001**

(86) International application number:
**PCT/US2001/045571**

(87) International publication number:
**WO 2002/037314 (10.05.2002 Gazette 2002/19)**

(54) **DATA ENCODING METHOD AND SYSTEM**

DATENCODIERUNGSVERFAHREN UND -SYSTEM

SYSTEME ET PROCEDE DE CODAGE DE DONNEES

(84) Designated Contracting States:
**DE FR GB**

(30) Priority: **03.11.2000 US 706444**

(43) Date of publication of application:
**20.08.2003 Bulletin 2003/34**

(73) Proprietor: **MOTOROLA, INC.**
**Schaumburg, IL 60196 (US)**

(72) Inventors:
• **BULLOCK, James, Blake**
**Gilbert, AZ 85296 (US)**
• **DENG, Zhan**
**Tempe, AZ 85284 (US)**
• **MONDRAGON, Nohora**
**Bogota (CO)**
• **ROJAS, Ivan, G.**
**Gilbert, AZ 85296 (US)**
• **SAAVEDRA, Rafael, A.**
**Chandler, AZ 85226 (US)**
• **URIBE, Juan, Carlos**
**Gilbert, AZ 85296 (US)**

(74) Representative: **Cross, Rupert Edward Blount et al**
**BOULT WADE TENNANT,**
**Verulam Gardens**
**70 Gray's Inn Road**
**London WC1X 8BT (GB)**

(56) References cited:
**EP-A- 0 838 771**        **EP-A- 0 987 823**
**US-A- 5 543 789**

**Description**

Field of the Invention

This invention relates generally to encoding data and, in particular to encoding data for transmission to a remote communications node.

Background of the Invention

Distributed applications generally have a server component where content is stored and a client component for information display. An example of this is a distributed navigation system where map and traffic data is stored on a navigation server, and a client component is utilized for route guidance and information display.
Prior art communications methods of encoding content, especially navigation content, for transfer between a server component and a client component have numerous deficiencies. For example, existing encoding methods that require large bandwidths or are dependent upon a limited number of communications protocols. Also, prior art methods require that the client have substantial computing power to decode the transmitted content. In addition, existing encoding methods do not permit use of content by the client component before all of the content has arrived (streaming), or the sending of a level of content detail in proportion to the capability of the client component (serialization). Prior art methods, for example, compress an entire set of data down so that individual data layers are no longer distinguishable, transmit the compressed file, then have the remote communications device uncompress the set of data prior to utilization. This method requires that the client have substantial processing capabilities and does not allow the client to utilize data before the all of the compressed data file is received and uncompressed.
US 5543789 describes a system in which routing information is transmitted from a base unit to a mobile unit where only pertinent information is transmitted to reduce data transfers.
EP 0987823 describes a data compression method and system that includes the substitution of a substring of data characters located at a first position in a stream of data characters with a substitution code.
Accordingly, there is a significant need for methods and apparatus that overcome the deficiencies of the prior art outlined above.

Brief Description of the Drawings

Referring to the drawing:

FIG. 1 depicts an exemplary information appliance system, according to one embodiment of the invention;
FIG.2 depicts a remote communications node of an exemplary information appliance system;
FIG.3 depicts a local node of an exemplary information appliance system;
FIG.4 depicts a regional node of an exemplary information appliance system;
FIG.5 illustrates a simplified block diagram showing a navigation portion of information appliance system according to one embodiment of the invention;
FIG.6 depicts a structured set of data in accordance with an embodiment of the invention;
FIG.7 depicts a structured set of data in accordance with an embodiment of the invention;
FIG.8 depicts a structured set of data in accordance with an embodiment of the invention;
FIG.9 depicts a structured set of data in accordance with an embodiment of the invention;
FIG.10 depicts a structured set of data in accordance with an embodiment of the invention;
FIG.11 depicts a structured set of data in accordance with an embodiment of the invention;
FIG.12 illustrates a diagram depicting a method of encoding data, according to one embodiment of the invention; and
FIG.13 illustrates a more detailed diagram depicting a method of encoding data, according to one embodiment of the invention.

It will be appreciated that for simplicity and clarity of illustration, elements shown in the drawing have not necessarily been drawn to scale. For example, the dimensions of some of the elements are exaggerated relative to each other. Further, where considered appropriate, reference numerals have been repeated among the Figures to indicate corresponding elements.

Description of the Preferred Embodiments

The present invention is a method and apparatus for encoding content data for a distributed communications system with software components running on mobile client platforms and on remote server platforms.

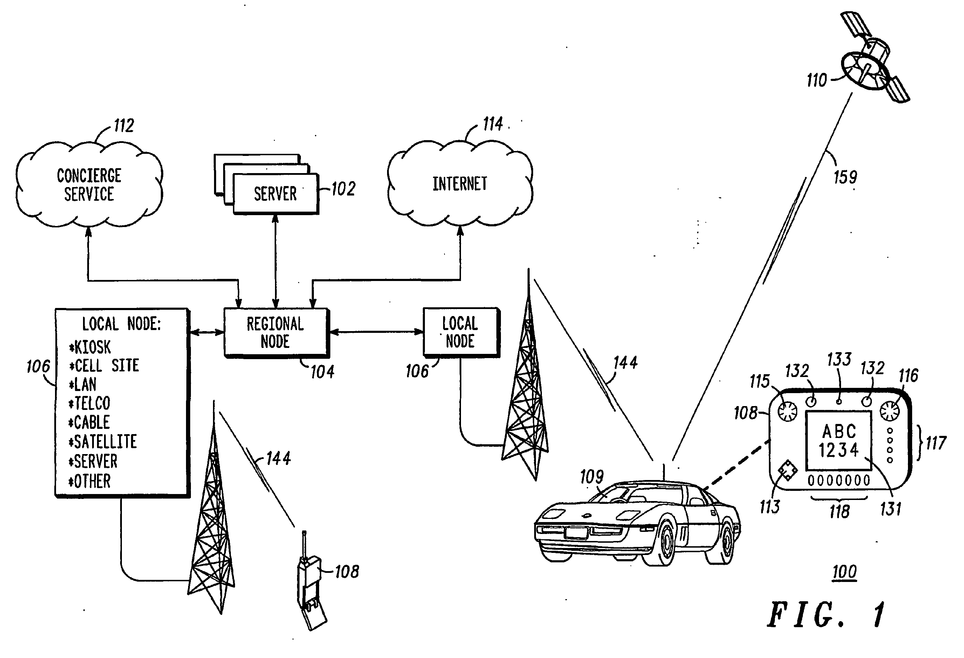

FIG. 1 depicts an exemplary information appliance system 100 with associated communications nodes 104, 106, 108, according to one embodiment of the invention. Shown in FIG. 1 are examples of components of an information appliance system 100, which comprises a plurality of servers 102 coupled to a regional node 104, and a plurality of local nodes 106 coupled to regional node 104. There can be any number of servers 102, regional nodes 104, and local nodes 106 within the information appliance system 100. The regional node 104 can be coupled to a network, such as the Internet 114, and to any number of concierge services 112.

Servers 102, while illustrated as coupled to regional node 104, could be implemented at any hierarchical level(s) within information appliance system 100. For example, servers 102 could also be implemented within one or more local nodes 106, concierge service 112, and Internet 114.

Without limitation, local node 106 can be a kiosk, cell site, local area network (LAN), telephone company, cable company, satellite, or any other information service, structure, or entity that can transmit, receive, and/or communicate information. An information service can be any desired service including, but not limited to, telecommunications, broadband communications, entertainment, television, radio, recorded music, movies, computer-based games, Internet, and other types of public, private, personal, commercial, government, and military communications.

Local node 106 is coupled to any number of remote communications nodes 108 via wireline or wireless interface means. In the embodiment depicted in FIG. 1, remote communications nodes 108 can transmit and receive information using wireless communications means. Remote communications nodes 108 without limitation can include a wireless unit such as a cellular or Personal Communication Service (PCS) telephone, a pager, a hand-held computing device such as a personal digital assistant (PDA) or Web appliance, or any other type of communications and/or computing device. Without limitation, one or more remote communications nodes 108 can be contained within, and optionally form an integral part of a vehicle, such as a car 109, truck, bus, train, aircraft, or boat, or any type of structure, such as a house, office, school, commercial establishment, and the like. As indicated above, a remote communications node 108 can also be implemented in a device that can be carried by the user of the information appliance system 100.

In one embodiment, a remote communications node 108 comprises an in-vehicle information appliance comprising various human interface (H/I) elements such as a display 131, a multi-position controller 113, one or more control knobs 115 and 116, one or more indicators 117 such as bulbs or light emitting diodes (LEDs), one or more control buttons 118, one or more speakers 132, a microphone 133, and any other H/I elements required by the particular applications to be utilized in conjunction with the information appliance.

Remote communications nodes 108 can also transmit and/or receive data to and from devices and services other than local node 106. For example, remote communications nodes 108 can transmit and receive data to and from a satellite 110.

The information appliance system 100 including the remote communications nodes 108 is capable of utilizing audio data in any number of encoding methods from any number of sources that include, but are not limited to, ADPCM (adaptive differential pulse-code modulation); CD-DA (compact disc - digital audio) digital audio specification; and ITU (International Telecommunications Union) Standards G.711, G. 722, G.723 & G.728.

The information appliance system 100 including the remote communications nodes 108 is capable of utilizing video data in any number of encoding methods from any number of sources that include, but are not limited to, ITU Standards H.261 & H.263; Motion JPEG (Joint Photographic Experts Group); and MPEG-1, MPEG-2 and MPEG-4 (Motion Picture Experts Group) standards.

Additionally, the information appliance system 100 is capable of utilizing audio and video data in any number of formats and using any type of transport technology that include, but are not limited to, USB (Universal Serial Bus); IEEE (Institute of Electrical and Electronics Engineers) Standards 1394-1995; and IEEE 802.11; and using protocols such as HTTP (hypertext transfer protocol); TCP/IP (transmission control protocol / Internet protocol); and UDP/IP (user datagram protocol / Internet protocol).

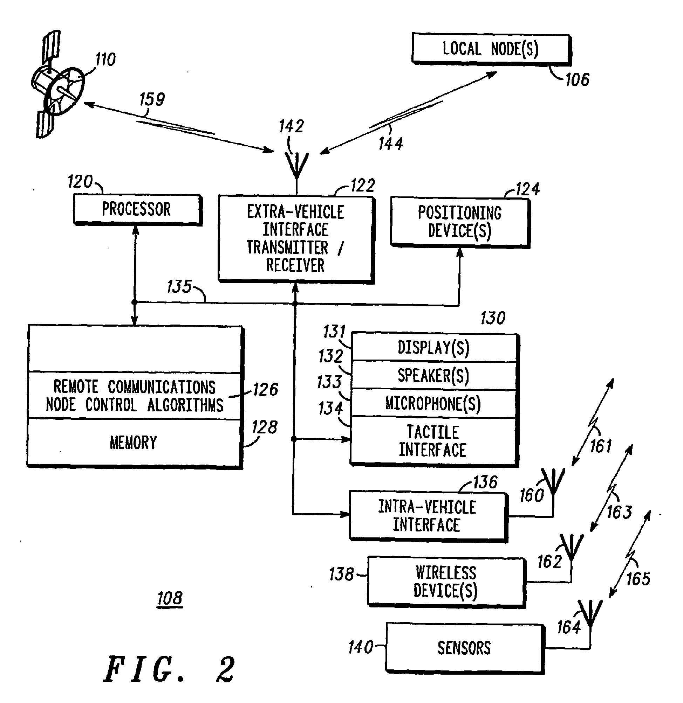

FIG. 2 depicts a remote communications node 108 of an exemplary information appliance system 100. As indicated above, remote communications node 108 can without limitation be located within or be an integral part of any vehicle, such as an automobile, truck, bus, train, aircraft, or boat, or be carried with a user, or be located in a stationary location or structure, and the like. As shown in FIG. 2, the remote communications node 108 comprises a processor 120 with associated remote communications node memory 128. Remote communications node memory 128 comprises remote communications node control algorithms 126. Remote communications node memory 128 can include, but is not limited to, random access memory (RAM), read only memory (ROM), flash memory, and other memory such as a hard disk, floppy disk, and/or other appropriate type of memory. Remote communications node 108 can initiate and perform communications with other nodes shown in FIG. 1 in accordance with suitable computer programs, such as remote communications node control algorithms 126, stored in remote communications node memory 128.

Remote communications node 108 also comprises a user interface device 130 that can include without limitation a tactile interface 134, microphone 133, speakers 132, any number of displays 131, and the like.

Remote communications node 108 also comprises an extra-vehicle interface 122, typically implemented as a transmitter/receiver for transmitting and receiving communications via a wireless link 144 among the various nodes depicted in FIG. 1. Extra-vehicle interface 122 also facilitates communications among other devices via wireless link 159, for example, satellite 110, and the like. Communications are transmitted and received through one or more antennas 142 of any type, which can include any one or combination of a fixed, steerable, omni-directional, or phased array antenna. Steerable antenna can include, but is not limited to, an electronically steerable antenna, physically steerable antenna, and the like. Remote communications node 108 can also include positioning devices 124 of any type, for example, global positioning system (GPS), gyroscope, compass, accelerometer, altimeter, rate sensors, and other positioning devices 124 that can define the position, attitude, and/or motion vector of the remote communications node 108.

Remote communications node 108 can also comprise an intra-vehicle interface 136, which can include antenna 160. Intra-vehicle interface 136 can include multiple types of transceivers (not shown) and antennas 160 to implement different short-range wireless protocols, such as Bluetooth™, IEEE wireless local area network (LAN) standard 802.11, and infrared. Intra-vehicle interface 136 is capable of short-range wireless communications, via wireless link 161, with other wireless devices 138 and sensors 140 of any type, for example, wireless telephones, computers, pagers, PDA's, entertainment devices, printers, fax machines, wireless local networks such as Bluetooth™, vehicle sensors, vehicle actuators, vehicle displays, and the like. In addition, intra-vehicle interface 136 can be used to communicate with wireless devices that are physically outside the vehicle but close to the vehicle, such as a service station kiosk. One or more wireless devices 138 can comprise one or more antennas such as antenna 162 and communicate via wireless link 163. One or more sensors 140 can comprise one or more antennas such as antenna 164 and communicate via wireless link 165.

In one embodiment, the various components and systems in FIG. 2 can communicate with each other via a wireline link 135, for example, a power/data/control bus, and the like. In another embodiment, some of the various components and systems in FIG. 2 could communicate via a wireless link.

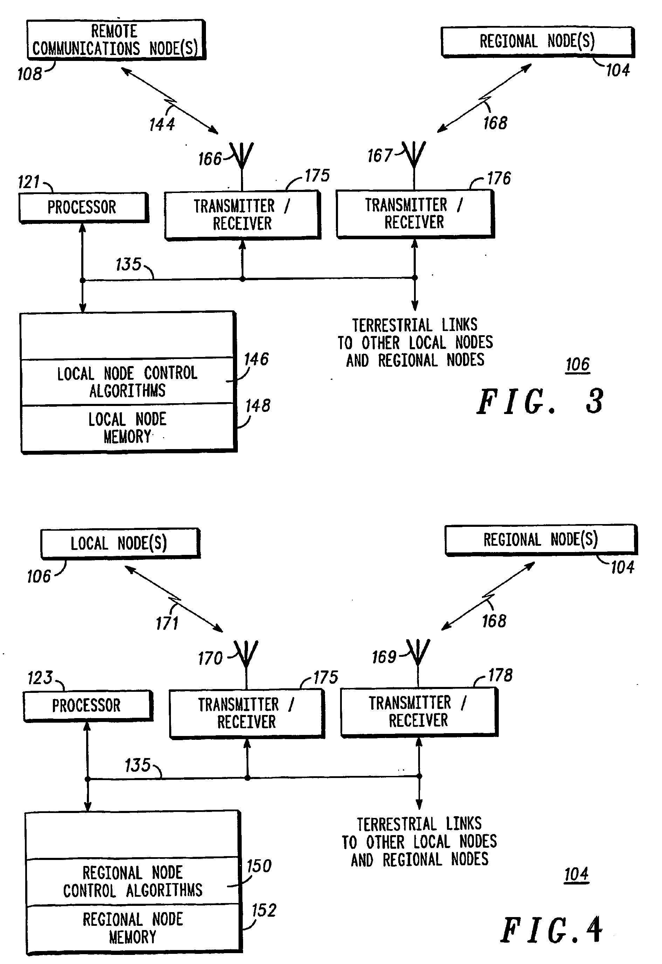

FIG. 3 depicts a local node 106 of an exemplary information appliance system 100. As shown in FIG. 3, the local node 106 comprises a processor 121 with associated local node memory 148. Local node memory 148 comprises local node control algorithms 146. Local node memory 148 can include, but is not limited to, random access memory (RAM), read only memory (ROM), and other memory such as a hard disk, floppy disk, and/or other appropriate type of memory. Local node 106 can initiate and perform communications with other nodes shown in FIG. 1 in accordance with suitable computer programs, such as local node control algorithms 146, stored in local node memory 148.

Local node 106 also comprises any number of transmitters/receivers 175 for transmitting and receiving communications via wireless link 144 to and from any number of remote communications nodes 108. Communications are transmitted and received through antenna 166.

Local node 106 also comprises any number of transmitter/receivers 176 for transmitting and receiving communications via wireless link 168 to and from any number of regional nodes 104. Communications are transmitted and received through antenna 167. As shown in FIG. 3, the various components and systems can also communicate via terrestrial links such as wireline, radio frequency (RF), or optical links, and the like, with other local nodes 106 and regional nodes 104.

In one embodiment, the various components and systems in FIG. 3 can communicate with each other via a wireline link 135, for example, a power/data/control bus, and the like. In another embodiment, some of the various components and systems in FIG. 3 could communicate via a wireless link.

FIG. 4 depicts a regional node 104 of an exemplary information appliance system 100. As shown in FIG. 4, the regional node 104 comprises a processor 123 with associated regional node memory 152. Regional node memory 152 comprises regional node control algorithms 150. Regional node memory 152 can include, but is not limited to, random access memory (RAM), read only memory (ROM), and other memory such as a hard disk, floppy disk, and/or other appropriate type of memory. Regional node 104 can initiate and perform communications with other nodes shown in FIG. 1 in accordance with suitable computer programs, such as regional node control algorithms 150, stored in regional node memory 152.

Regional node 104 also comprises any number of transmitters/receivers 177 for transmitting and receiving communications via wireless link 171 to and from any number of local nodes 106. Communications are transmitted and received through an antenna 170.

Regional node 104 also comprises any number of transmitters/receivers 178 for transmitting and receiving communications via wireless link 168 to and from any number of regional nodes 104, servers 102, and the like. Communications are transmitted and received through antenna 169. As shown in FIG. 4, the various components and systems can also communicate, via terrestrial links such as wireline, radio frequency (RF), or optical links, and the like, with other local nodes 106 and regional nodes 104.

In one embodiment, the various components and systems in FIG. 4 can communicate with each other via a wireline link 135, for example, a power/data/control bus, and the like. In another embodiment, some of the various components and systems in FIG. 4 could communicate via a wireless link.

In FIGS. 2-4, processors 120, 121, and 123, respectively, perform distributed, yet coordinated, control functions within information appliance system 100 (FIG. 1). Processors 120, 121, and 123 are merely representative, and information appliance system 100 can comprise many more processors within the distributed servers 102, regional nodes 104, local nodes 106, and remote communications nodes 108.

Processors 120, 121, and 123 can be of any suitable type or types, depending upon the functional requirements of the overall information appliance system 100 and its constituent elements, including servers 102, regional nodes 104, local nodes 106, and remote communications nodes 108.

Processors 120, 121, and 123 comprise portions of data processing systems that perform processing operations on computer programs that are stored in computer memory such as, but not limited to, remote communications node memory 128, local node memory 148, and regional node memory 152. Processors 120, 121, and 123 also read data from and store data to memory, and they generate and receive control signals to and from other elements within information appliance system 100.

The particular elements of the information appliance system 100, including the elements of the data processing systems, are not limited to those shown and described, and they can take any form that will implement the functions of the invention herein described.

To provide an example of one context in which the present invention may be used, an example of encoding navigational data for transmission to a remote communications node will now be described. However, the present invention is not limited to encoding of navigational data, and can include the encoding of any type of data for transmission to a remote communications node. The present invention is not limited to implementation by any particular set of elements, and the description herein is merely representational of one embodiment. The specifics of one or more embodiments of the invention are provided below in sufficient detail to enable one of ordinary skill in the art to understand and practice the present invention.

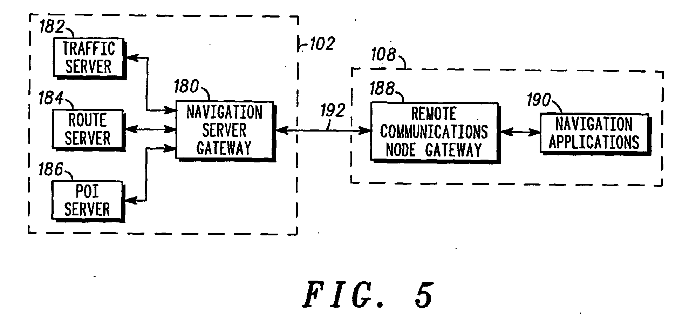

FIG.5 illustrates a simplified block diagram showing a navigation portion of information appliance system 100 according to one embodiment of the invention. As shown in FIG.5, servers 102 can comprise a navigation server gateway coupled to various software blocks, such as, a traffic server 182, a route server 184 and a point-of-interest (POI) server 186.

Traffic server 182 can contain traffic information including, but not limited to, traffic reports, traffic conditions, speed data, and the like. Route server 184 can contain information including, but not limited to, digital road map data, route alternatives, route guidance, and the like. POI server 186 can contain information for points of interests such as gasoline stations, restaurants, motels, movie theatres, and the like.

Each of traffic server 182, route server 184, and POI server 186 can send and receive content data from external sources such as local traffic reports, news agencies, and the like, in addition to content data already stored on servers 102.

Each of servers 102 depicted in FIG.5 communicate with remote communications node 108 through navigation server gateway 180 via wireless link 192. Wireless link 192, couples navigation server gateway 180 with its counterpart, remote communications node gateway 188. Remote communications node gateway 188 is coupled to navigation applications 190, which can include, without limitation, traffic applications, route guidance applications, POI applications, and the like. Navigation applications 190 can process data received from servers 102, positioning devices 124, satellites, and the like, to provide useful information to users of remote communications node 108.

Software blocks that perform embodiments of the invention are part of computer program modules comprising computer instructions, such as local node control algorithms 146 (FIG. 3), that are stored in a computer-readable medium such as local node memory 148. Additionally, or alternatively, they can be implemented as regional node control algorithms 150 (FIG. 4), which are stored in regional node memory 152. In other embodiments, additional modules could be provided as needed, and/or unneeded modules could be deleted.

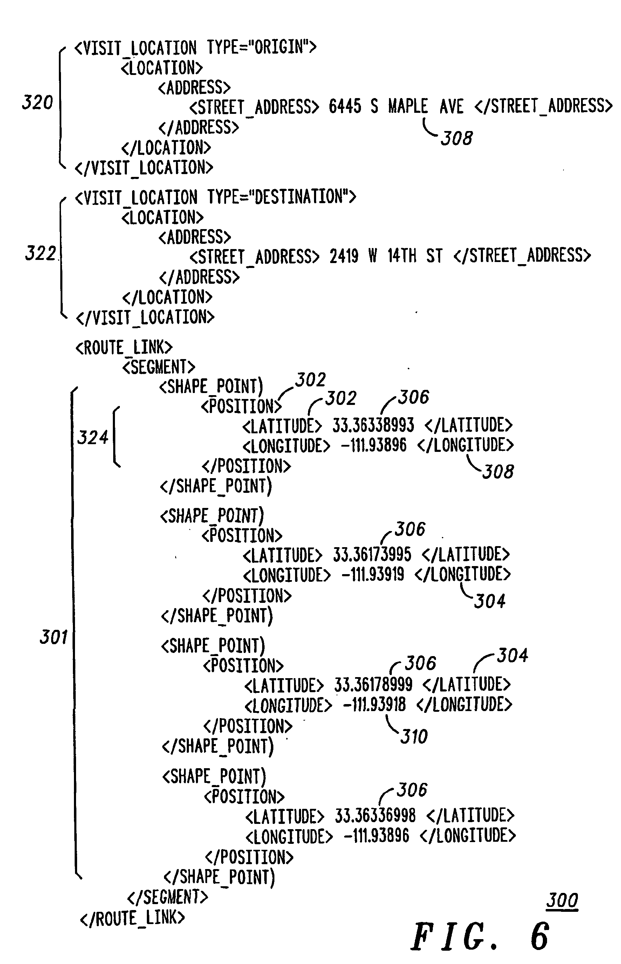

FIG.6 depicts a structured set of data 300 in accordance with an embodiment of the invention. As shown in FIG.6, a set of content data has been converted to a structured set of data 300. A set of content data can include any sort of data that can be transmitted via wireless or wireline means to remote communications node 108. For example, in the present embodiment, a set of content data can include, navigation data, addresses, digital road map data, position data, and the like. However, the invention is not limited to aforementioned examples of content data. The invention can include any category or type of content data. In this particular embodiment of the invention, content data includes street addresses for an "origin" and "destination" point along with latitude and longitude coordinates for a portion of the path between the "origin" and "destination" points.

Structured set of data 300 includes the set of content data converted into a structured representation of set of content data for exchange between applications. For example, structured set of data 300 in FIG.6 is shown in Extensible Markup Language (XML) format, which includes data layers 320, 322, 324. The data layers shown are an origin address data layer 320, a destination address data layer 322, and a position data layer 324. The invention is not limited to XML format or the data layers 320, 322, 324 shown. The invention can include other data layers, for example map coordinate data layers, additional address data layers, additional position data layers, and the like. The invention can also include content data converted to a structured set of data in other language formats as well.

In the embodiment shown in FIG.6, structured set of data 300 includes a plurality of tags 302, for example "address," "position," "latitude," and the like, which are characteristic of XML format. For example, the tags "longitude" and "latitude" represent that the numerical elements 310 within those tags represent longitude and latitude respectively.

Both the plurality of tags 302 and the content data can include a plurality of text strings 304 comprised of a plurality of characters 308.

Content data can also include a sequence of numerical data 306 comprised of numerical elements 310. Sequence of numerical data 306 in FIG.6 includes the numerical values of latitude and longitude and does not imply any particular pattern or sequence applied to the sequence of numerical data 306. Sequence of numerical data 306 can also include position data, such as latitude and longitude, and the like, sufficient to create an entire route, network of routes, map, and the like.

For simplification, a segment of structured set of data 301 of FIG.6 will be utilized in subsequent Figures to illustrate various encoding techniques that are embodiments of the invention. Each of the techniques shown below can be performed during the formatting phase or encoding phase when processing structured set of data 300 for transmission to remote communications node 108. The subsequent Figures illustrate formatting or encoding structured set of data 300 by applying each formatting or encoding technique sequentially. However, the invention-is not limited to the sequence shown or any other sequence. Any number of the techniques below can be performed in any sequence and in any combination as the particular situation dictates.

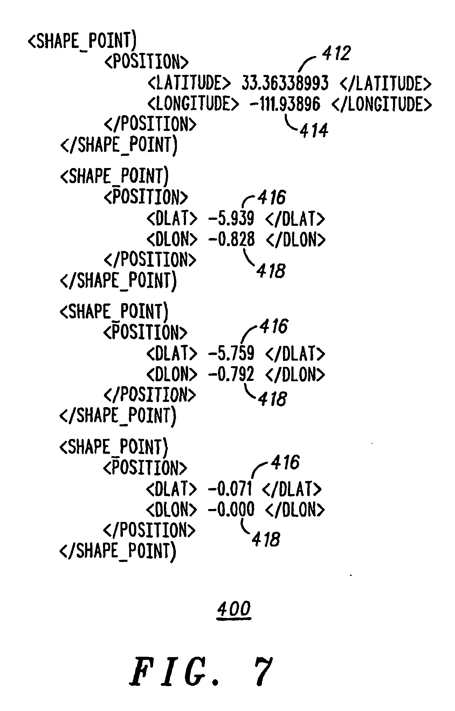

FIG.7 depicts a structured set of data 400 in accordance with an embodiment of the invention. Shown in FIG. 7 is a formatted or encoded version of segment of structured set of data 301 from FIG.6. In the embodiment shown, reference numerical elements 412, 414 are chosen from sequence of numerical data 306. Sequence of numerical data subsequent to reference numerical elements 412, 414 are replaced with a numerical differential 416, 418 from reference numerical element.

In the embodiment shown in FIG.7, the first value for latitude is chosen as reference numerical element 412 for latitude with subsequent latitude values replaced with the numerical differential 416 between the reference numerical element 412 and the original subsequent latitude value shown in FIG.6. The tags for numerical differential 416 have been changed to "dlat" to reflect that the numerical element within the tags "dlat" represent a numerical differential of latitude.

The first value of longitude is chosen as reference numerical element 414 for longitude with subsequent longitude values replaced with the numerical differential 418 between the reference numerical element 414 and the original value of longitude shown in FIG.6. The tags for numerical differential 418 have been changed to "dlon" to reflect that the numerical element within the tags "dlon" represent a numerical differential of longitude.

In another embodiment, subsequent latitude and longitude values can be replaced with a numerical differential derived from the previous longitude or latitude value and the original longitude or latitude value. In other words, instead of numerical differentials 416, 418 being based on numerical reference elements 412, 414, numerical differentials 416, 418 can be stepped differentials based on the previous numerical differential 416, 418 or reference numerical element 412, 414. This offers the advantage of maintaining numerical differentials 416, 418 small in size since they are in effect a stepped or rolling differential.

Since numerical differentials 416, 418 are small numbers in this embodiment, numerical differentials 416, 418 are further converted from the unit of "degrees" to the unit of "seconds." This further reduces the size of the data shown in FIG.7 for transmission to remote communications node 108. Depending on the size of numerical differential 416, 418, other units can be used such as "minutes," "degrees," and the like. No units are shown in FIG.7 and the numerical differentials 416 and 418 are understood to be in units of "seconds." However, it is within the scope of the invention to include additional characters in the numerical differentials 416 and 418 to denote the units used. For example, and without limitation, the character "M" can be included in numerical differentials 416, 418 if the units are in "minutes," or the character "D" can be included in numerical differentials 416, 418 if the units are "degrees."

In another embodiment, plurality of text strings 304 and corresponding plurality of characters 308 shown in FIG.6 can be reduced using a similar technique as shown above. For example, a numerical value is assigned to each of the plurality of characters 308, where each unique character has a unique numerical value. One of the plurality of characters is assigned as a reference character element while plurality of characters subsequent to the reference character element are replaced with a numerical differential from the reference character element. This will further reduce the amount of structured set of data 400 for transmission to remote communications node 108.

As an example of the present embodiment, Table 1 illustrates the street address shown in data layer 320 in its present character format in the first column, Unicode format in the second column and utilizing numerical differentials in the third column.

TABLE 1

| Character | Unicode | (Reference Character Element) |
|---|---|---|
| '6' | 54 | 54 (stored as is in Unicode) |
| | | |

Table continued

| Character | Unicode | Numerical Differential |
|-----------|---------|------------------------|
| '4' | 52 | -2 |
| '4' | 52 | -2 |
| '5' | 53 | -1 |
| SPACE | 32 | -22 |
| 'S' | 83 | 29 |
| SPACE | 32 | -22 |
| 'M' | 77 | 23 |
| 'a' | 97 | 43 |
| 'p' | 112 | 58 |
| 'l' | 108 | 54 |
| 'e' | 101 | 47 |
| SPACE | 32 | -22 |
| 'A' | 65 | 11 |
| 'v' | 118 | 64 |
| 'e' | 101 | 47 |
| 'T' | 84 | 30 |
| 'e' | 101 | 47 |
| 'm' | 109 | 55 |
| 'p' | 112 | 58 |
| 'e' | 101 | 47 |
| 'A' | 65 | 11 |
| 'Z' | 90 | 36 |

As Table 1 illustrates, assigning each of the plurality of characters a numerical value, assigning a reference character element and replacing plurality of characters subsequent with numerical differentials provides for a significant reduction in the number of bytes required to represent plurality of text strings 304, in effect reducing the size of structured set of data 400.

The structure and format in the present example is in no way limiting. Any character and any number of characters can be chosen as reference character elements. When a numerical differential becomes too large, a new reference character element can be chosen. This embodiment has a particular advantage in allowing the reduction in size of any language or set of characters represented in Unicode. For example, if data contains multiple languages (i.e. English and Chinese), a reference character element can be chosen for each language thereby keeping the numerical differentials small in size.

In another embodiment, subsequent plurality of characters can be replaced with numerical differential derived from the previous character and the original character. In other words, instead of numerical differentials 416, 418 being based on reference character elements, numerical differentials 416, 418 can be stepped differentials based on the previous numerical differential 416, 418 or reference character element.

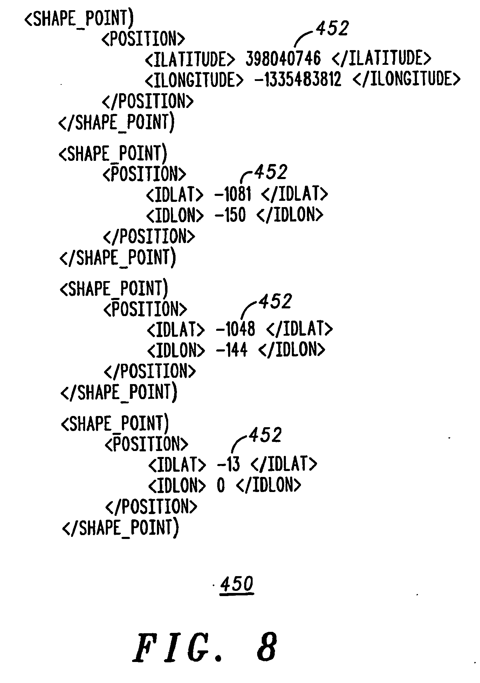

FIG.8 depicts a structured set of data 450 in accordance with an embodiment of the invention. Shown in FIG. 8 is a formatted or encoded version of structured set of data 400 from FIG.7. In the embodiment shown, numerical elements from structured set of data 400 in FIG.7 have a corresponding range of values. For example, longitude and latitude have a corresponding range of values from 0 to 180 degrees. There are 648,000 seconds in 180 degrees and 2,147,483,648 different numbers can be represented in a 31-bit integer (reserving the 32nd bit for sign convention). So, in order to further reduce the size of structured set of data 400 from FIG.7, values of longitude and latitude (which are generally floating values) are converted to at least one integer 452 (4-byte integer in this example) and mapped into the corresponding range of values. In the example shown in FIG.8, the converting and mapping steps are accomplished with the formula:

$$Integer = Numerical\ element*2^{31}/180$$

"Numerical element" is the value of the numerical element (either before or after encoding/formatting using other techniques), and "Integer" is the resulting at least one integer 452 mapped into the corresponding range of values. Shown in FIG.8 is the result of applying this technique to the structured set of data 400 shown in FIG. 7.

The tags "latitude" and "longitude" have been changed to "ilatitude" and "ilongitude" respectively to reflect that numerical elements within the tags are an integer representation of latitude and longitude mapped into a corresponding range of values. Analogously, tags "dlat" and "dlon" have been changed to "idlat" and "idlon" respectively. The invention is not limited to the tag modifications described and other tag text strings are within the scope of the invention.

However, the invention is not limited by the formula or numbers above and can be implemented by utilizing any number of bytes in the integer and correspondingly mapping to an appropriate range of values for the type or classification of numerical elements used. The above technique has the effect of further reducing the size of structured set of data 450 for transmission to remote communications node 108.

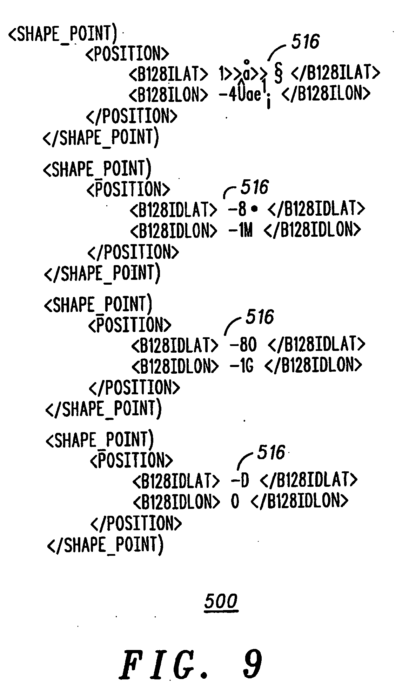

FIG.9 depicts a structured set of data 500 in accordance with an embodiment of the invention. Shown in FIG. 9 is a formatted or encoded version of structured set of data 450 from FIG.8. In the embodiment shown, sequence of numerical data 306 from structured set of data 450 in FIG.8 has been converted to an alternate numerical base format 516. The conversion to alternate numerical base format 516 further reduces the size of structured set of data 500. The invention includes converting sequence of numerical data 306 to any alternate numerical base format 516, for example, $base_{64}$, $base_{128}$, and the like.

In the example shown, sequence of numerical data 306 is converted to $base_{128}$, with $base_{128}$ characters chosen to avoid characters that have meaning in XML of the present example. The tags shown in FIG.9 have been modified by adding "b128" to represent that a numerical element is now in $b_{128}$ format. Table 2 is the conversion chart for converting $base_{10}$ characters to $base_{128}$ used in the present embodiment. Table 2 is in no way limiting, and any combination of characters can be used for conversion to $base_{128}$, or any other base, as long as they do not interfere with characters in XML or other chosen format for structured set of data 500.

TABLE 2

| 0 0 | 1 1 | 2 2 | 3 3 | 4 4 | 5 5 | 6 6 | 7 7 |
|---|---|---|---|---|---|---|---|
| 8 8 | 9 9 | 10 A | 11 B | 12 C | 13 D | 14 E | 15 F |
| 16 G | 17 H | 18 I | 19 J | 20 K | 21 L | 22 M | 23 N |
| 24 O | 25 P | 26 Q | 27 R | 28 S | 29 T | 30 U | 31 V |
| 32 W | 33 X | 34 Y | 35 Z | 36 ¡ | 37 ¢ | 38 £ | 39 ¤ |
| 40 ¥ | 41 ¦ | 42 § | 43 ¨ | 44 © | 45 ª | 46 « | 47 ¬ |
| 48 ® | 49 ¯ | 50 ° | 51 ± | 52 ² | 53 ³ | 54 ´ | 55 µ |
| 56 ¶ | 57 · | 58 , | 59 ¹ | 60 º | 61 » | 62 ¼ | 63 ½ |
| 64 ¾ | 65 ¿ | 66 À | 67 Á | 68 Â | 69 Ã | 70 Ä | 71 Å |
| 72 Æ | 73 Ç | 74 È | 75 É | 76 Ê | 77 Ë | 78 Ì | 79 Í |
| 80 Î | 81 Ï | 82 Ð | 83 Ñ | 84 Ò | 85 Ó | 86 Ô | 87 Õ |
| 88 Ö | 89 x | 90 Ø | 91 Ù | 92 Ú | 93 Û | 94 ý | 95 þ |
| 96 ß | 97 à | 98 á | 99 â | 100 ã | 101 ä | 102 å | 103 æ |
| 104 ç | 105 è | 106 é | 107 ê | 108 ë | 109 ì | 110 í | 111 î |
| 112 ï | 113 ô | 114 ñ | 115 ò | 116 ó | 117 ô | 118 õ | 119 ö |
| 120 ÷ | 121 ø | 122 ù | 123 ú | 124 û | 125 ü | 126 ý | 127 Þ |

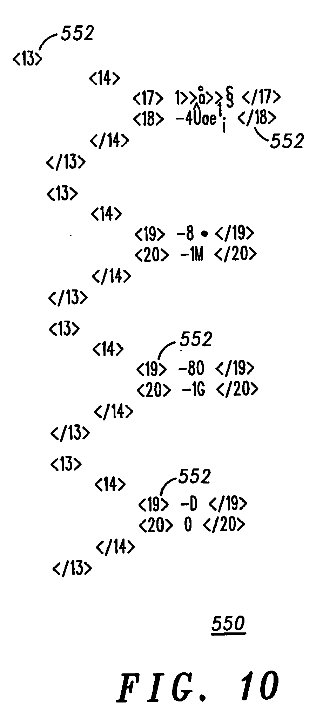

FIG. 10 depicts a structured set of data 550 in accordance with an embodiment of the invention. Shown in FIG. 10 is a formatted or encoded version of structured set of data 500 from FIG.9. In the embodiment shown, an identification number 552 is assigned to one or more of the plurality of text strings 304, and the identification number 552 replaces one or more of the plurality of text strings 304. A unique identification number 552 can be chosen for each unique text string 304.

For example, in the present embodiment, identification number "13" replaces text string "shape point," identification number "14" replaces text string "position," "17" replaces "b128ilat," "18" replaces "b128ilon," "19" replaces "b128idlat," and "20 replaces "b128idon." In the present embodiment, each of the plurality of text strings is part of plurality of tags 302, however the same technique can be applied to one or more of plurality of text strings 304 not in one of the plurality of tags 302. The present technique has the effect of reducing the number of characters in structured set of data 550, thereby reducing the size of structured set of data 550. The invention is not limited by the text string replacements shown in FIG.9. Other text string replacements are within the scope of the invention.

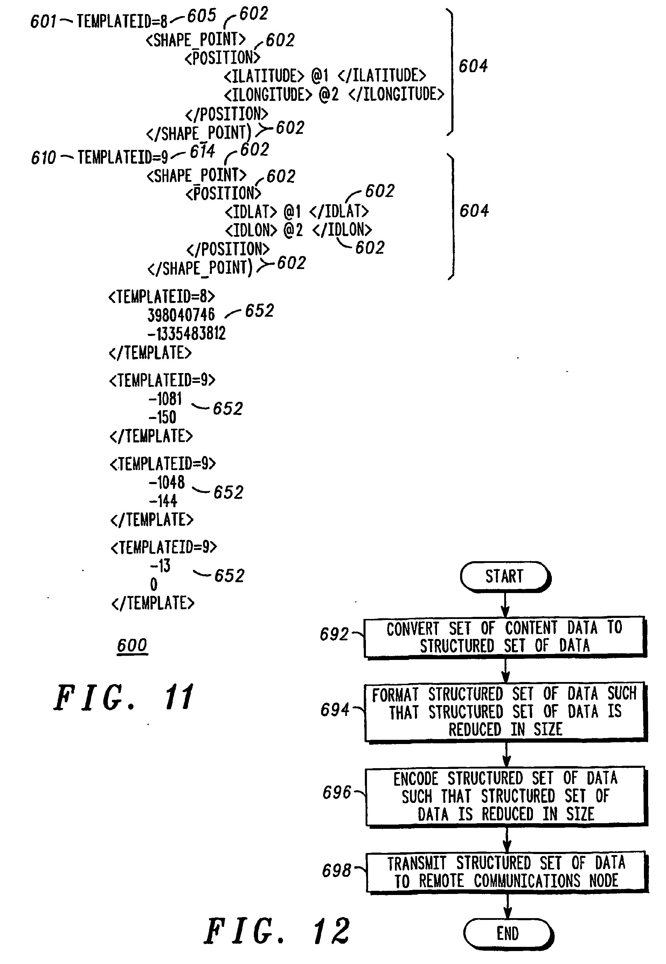

FIG.11 depicts a structured set of data 600 in accordance with an embodiment of the invention. Shown in FIG. 11 is a formatted or encoded version of structured set of data 450 from FIG.8. In the embodiment shown, one or more of plurality of tags 602 is replaced with a first template 601 and a second template 610. In the present embodiment, a repeating structure of tags 604 is replaced with first template 601 and second template 610. However, the invention is not limited to a repeating structure of tags 604. The replacement of any combination of plurality of tags 602 is within the scope of the invention.

In the embodiment shown, first template 601 replaces the first shape point having a repeating structure of one or more of plurality of tags 602. First template 601 incorporates the tags "ilatitude" and "ilongitude" consistent with the integer representation of latitude and longitude discussed in reference to FIG.8. Second template 610 replaces the remaining shape points having a repeating structure of one or more of plurality of tags 602. Second template 610 incorporates the tags "idlat" and "idlon" consistent with the at least one integer 652 and numerical differential representation of latitude and longitude discussed in reference to FIG.8.

Utilizing first template 601 and second template 610 reduces the size of structured set of data 600 for transmission to remote communications node 108. In the embodiment shown, first template 601 and second template 610 are transmitted to remote communications node 108 once, and subsequent numerical elements are transmitted with a first template ID 605 and second template ID 614 to mark each instance of first and second template 601, 610. Each template includes the template ID and plurality of tags 602. Plurality of tags 602 in first and second template 601, 610 can be in any variety of hierarchical structures. Templates can also include nested templates. Templates can also occur recursively throughout any given set of structured set of data 600. The invention is not limited to the two templates shown in FIG.11. Any number or type of templates are within the scope of the invention. For example, any number of templates can be utilized incorporating any number of hierarchical plurality of tags 602 with any number of nested hierarchical templates.

In the example of the embodiment shown, first template 601 has a template ID=8 and includes the hierarchical tag structure for a "shape point" in a navigational route description. Second template 610 has a template ID=9 and includes hierarchical tag structures for a "shape point" in a navigational route description. The "@1" and "@2" in first template 601 and second template 610 denote where sequence of numerical data is inserted in template.

Utilizing the example of the embodiment shown, remote communications node 108 first receives template data including the relevant plurality of tags 602, tag structure and the location of data within the plurality of tags 602. Subsequently, template ID 605 and 614 are transmitted followed by sequence of numerical data 306 (which is in the format from FIG.8). This effectively reduces in size the amount of structured set of data 600 required for transmission of longitude and latitude coordinates shown in FIG.11 by eliminating recurring tags and repeating structure of tags 604.

FIG.12 illustrates a diagram depicting a method of encoding data, according to one embodiment of the invention. In the present example of an embodiment of the invention, content data can include navigation data such as traffic data, route data, digital road map data, and the like. However, content data is not limited to navigation data and can include any type of data for transmission to remote communications node 108.

In step 692, content data is converted to a structured set of data capable of being processed by navigation server gateway 180. Structured set of data comprises a plurality of data layers 320, 322, 324. Structured set of data can be in any computer-readable format, for example, Extensible Markup Language (XML), and the like.

In step 694, structured set of data is formatted such that it is reduced in size, utilizing one or more of the techniques described above. In the process of formatting, one or more of the techniques described above can be used in any order in any relation to each other. Step 694 is designed to operate on structured set of data prior to encoding for transmission to remote communications node 108.

In step 696, structured set of data is encoded such that it is reduced in size, utilizing one or more of the techniques described above in any order desirable. Step 696 differs from step 694 in that the process of encoding includes transforming structured set of data to a binary representation using known techniques.

In step 698, structured set of data is transmitted to remote communications node 108 subsequent to the formatting and encoding steps described above. Step 698 includes transmitting each of the plurality of data layers separately, sequentially and the like, as necessary based on requirements and capabilities of remote communications node 108 and its navigational applications 190.

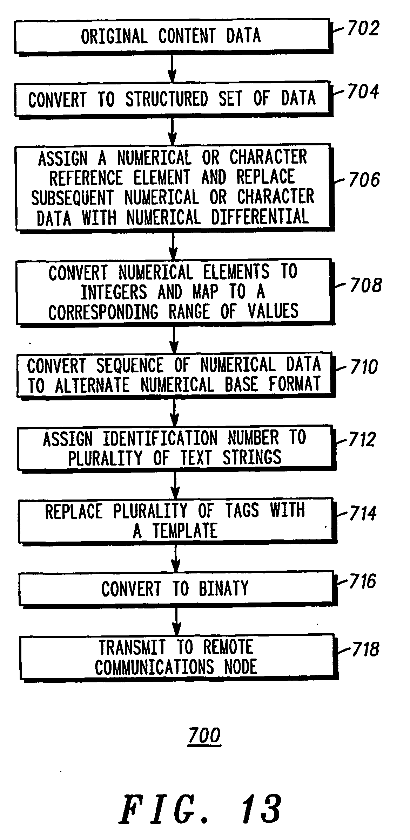

FIG.13 illustrates a more detailed diagram depicting a method of encoding data, according to one embodiment of the invention. In step 702, a set of content data is provided. Generally, a set of content data is already stored on servers 102 or received by information appliance system 100, and requested by remote communications node 108.

In step 704, content data is converted to a structured set of data capable of being processed by navigation server gateway 180. Structured set of data comprises a plurality of data layers 320, 322, 324. Structured set of data can be in any computer-readable format, for example, Extensible Markup Language (XML), and the like.

In step 706, one or more of sequence of numerical data is assigned as a reference numerical element 412, 414, while subsequent sequence of numerical data are replaced with numerical differentials 416, 418 from numerical reference element. Also, in step 706, a numerical value is assigned to each of the plurality of characters, wherein each unique character has a unique numerical value. One of the plurality of characters is assigned as a reference character element with plurality of characters subsequent to reference character element replaced with a numerical differential from reference character element.

In step 708, numerical elements 310 are converted to at least one integer 452 and mapped to a corresponding range of values.

In step 710, sequence of numerical data 306 is converted to an alternate numerical base format.

In step 712, an identification number 552 is assigned to one or more of the plurality of text strings 304.

In step 714, one or more of the plurality of tags 302 is replaced with a template 601. The plurality of tags 302 can include a repeating structure of tags 604.

In step 716, structured set of data 300 is converted to binary format. In another embodiment, the conversion to binary can occur before or during any of the steps of formatting or encoding structured set of data to achieve a reduction in size. In yet another embodiment, any one or more of steps 706-714 can be performed independently of each other. In other words, the invention includes performing any one or more of steps 706-714 by itself or in combination with each other. In another embodiment, any one or more of steps 706-714 can be performed in any particular order as situation dictates.

In step 718, structured set of data is transmitted to remote communications node 108 via wireless link 192. Subsequently, structured set of data is received by remote communications node 108. The structured set of data can be received in the format in which it was sent, XML in this example. Upon receipt, remote communications node 108 converts structured set of data back to the set of content data, whereby navigational applications 190 can process the set of content data.

One of the advantages of the embodiments described above is that structured set of data remains in the original language format (XML in the embodiments shown) while being reduced in size. The structured set of data is manipulated such that its size is reduced while maintaining distinguishable data layers, which eliminates the prior art step of having to compress a set of data in its entirety. This allows the transmitting of each of the plurality of data layers separately, which permits streaming and serialization of content data. This makes it possible for remote communications node 108 to utilize one of the plurality of data layers 320, 322, 324 prior to the arrival of a subsequent one of the plurality of data layers. Another advantage is that no particular protocol is required to transmit structured set of data, making the method of the invention more flexible and easier to implement across a wide spectrum of distributed wireless communications systems.

In information appliance system 100 described above, remote communications node 108 has a set of node attributes which determine, among other things, the capabilities, sophistication, and the like, of remote communications node 108. For example, set of node attributes can include information regarding any particular remote communications node's processing power, display capabilities, application availability, and the like.

Utilizing these sets of node attributes, navigational server gateway 180 can determine which of plurality of data layers 320, 322, 324 to transmit to remote communications node 108. For example, a less sophisticated remote communications node may not be able to process all of the navigational data available, which might include extensive graphical data, map data, or POI details. Utilizing set of node attributes and the fact that structured set of data has distinguishable data layers, navigational server gateway 180 can send only a portion of the plurality of data layers to remote communications node 108 in order to conserve bandwidth and allow remote communications node to process data more efficiently.

## Claims

1.  A method of encoding data for transmission to a remote communications node (108) comprising:

    providing a set of content data;
    converting the set of content data to a structured set of data (300), wherein the structured set of data comprises a plurality of text strings (304) and a sequence of numerical data (306), wherein structured set of data includes a plurality of data layers (320, 322, 324), and wherein structured set of data is in Extensible Markup Language format;

formatting the structured set of data such that the structured set of data is reduced in size, wherein formatting the structured set of data comprises:

assigning a one of the sequence of numerical data as a reference numerical element (412, 414), and wherein the sequence of numerical data subsequent to the reference numerical element are replaced with a numerical differential (416, 418) from the reference numerical element;

the sequence of numerical data comprising a plurality of numerical elements, wherein the sequence of numerical data has a corresponding range of values;

converting each of the numerical elements into at least one integer (452);

mapping the at least one integer into the corresponding range of values;

converting the sequence of numerical data to an alternate numerical base format (516); and

encoding the formatted structured set of data for transmission to the remote communications node such that the structured set of data is reduced in size, wherein encoding comprises converting the structured set of data into a binary format.

2. The method of claim 1, wherein formatting the structured set of data comprises assigning an identification number to one or more of the plurality of text strings, and wherein the identification number replaces one or more of the plurality of text strings.

3. The method of claim 1, wherein the sequence of numerical data subsequent to the reference numerical element are replaced with a numerical differential from a previous numerical differential.

4. The method of claim 1, wherein the structured set of data further comprises a plurality of tags, and wherein formatting comprises replacing one or more of the plurality of tags with a template.

5. The method of claim 4, wherein the plurality of tags further comprise a repeating structure of tags, and wherein formatting comprises replacing the repeating structure of tags with the template.

6. The method of claim 1, wherein the plurality of text strings is comprised of a plurality of characters, and wherein the step of formatting comprises the steps of:

assigning a numerical value to each of the plurality of characters, wherein each unique character of the plurality of characters has a unique numerical value;

assigning a one of the plurality of characters as a reference character element; and

replacing the plurality of characters subsequent to the reference character element with a numerical differential from the reference character element.

**Patentansprüche**

1. Verfahren zum Codieren von Daten zur Übertragung an einen fernen Kommunikationsknoten (108), das umfasst:

Bereitstellen eines Satzes von Inhaltsdaten;

Wandeln des Satzes von Inhaltsdaten in einen strukturierten Satz von Daten (300), wobei der strukturierte Satz von Daten eine Mehrzahl von Textstrings (304) und eine Sequenz von numerischen Daten (306) umfasst, wobei der strukturierte Satz von Daten eine Mehrzahl von Datenschichten (320, 322, 324) umfasst und wobei der strukturierte Satz von Daten ein Extensible-Markup-Language-Format aufweist;

Formatieren des strukturierten Satzes von Daten, so dass die Größe des strukturierten Satzes von Daten verringert wird, wobei ein Formatieren des strukturierten Satzes von Daten umfasst:

Zuweisen eines Datenwerts aus der Sequenz von numerischen Daten als ein numerisches Referenzelement (412, 414), wobei die Sequenz von numerischen Daten im Anschluss an das numerische Referenzelement durch ein numerisches Differential 416, 418) von dem numerischen Referenzelement ersetzt wird;

wobei die Sequenz von numerischen Daten eine Mehrzahl von numerischen Elementen umfasst und die Sequenz von numerischen Daten über einen entsprechenden Bereich von Werten verfügt;

Wandeln jedes der numerischen Elemente in mindestens eine ganze Zahl (452);

Abbilden der mindestens einen ganzen Zahl in den entsprechenden Bereich von Werten;

Wandeln der Sequenz von numerischen Daten in ein alternatives numerisches Basisformat (516); und

Codieren des formatierten strukturierten Satzes von Daten zur Übertragung an den fernen Kommunikationsknoten, so dass die Größe des strukturierten Satzes von Daten verringert wird, wobei ein Codieren ein Wandeln des strukturierten Satzes von Daten in ein Binärformat umfasst.

2. Verfahren gemäß Anspruch 1, wobei ein Formatieren des strukturierten Satzes von Daten ein Zuweisen einer Identifizierungsnummer zu einem oder mehreren von der Mehrzahl von Textstrings umfasst und wobei die Identifizierungsnummer einen oder mehrere von der Mehrzahl von Textstrings ersetzt.

3. Verfahren gemäß Anspruch 1, wobei die Sequenz von numerischen Daten im Anschluss an das numerische Referenzelement durch ein numerisches Differential von einem vorherigen numerischen Differential ersetzt wird.

4. Verfahren gemäß Anspruch 1, wobei der strukturierte Satz von Daten weiterhin eine Mehrzahl von Tags umfasst, wobei ein Formatieren ein Ersetzen von einem oder mehreren von der Mehrzahl von Tags durch ein Template umfasst.

5. Verfahren gemäß Anspruch 4, wobei die Mehrzahl von Tags weiterhin eine sich wiederholende Struktur von Tags umfasst und wobei ein Formatieren ein Ersetzen der sich wiederholenden Struktur von Tags durch das Template umfasst.

6. Verfahren gemäß Anspruch 1, wobei die Mehrzahl von Textstrings eine Mehrzahl von Zeichen umfasst und wobei der Schritt des Formatierens die folgenden Schritte umfasst:

Zuweisen eines numerischen Wertes zu jedem von der Mehrzahl von Zeichen, wobei jedes eindeutige Zeichen von der Mehrzahl von Zeichen über einen eindeutigen numerischen Wert verfügt;

Zuweisen eines von der Mehrzahl von Zeichen als ein Referenzzeichenelement; und

Ersetzen der Mehrzahl von Zeichen im Anschluss an das Referenzzeichenelement durch ein numerisches Differential von dem Referenzzeichenelement.

## Revendications

1. Procédé de codage de données pour la transmission à un noeud de communications distant (108) comprenant :

la fourniture d'un ensemble de données de contenu ;

la conversion de l'ensemble de données de contenu en un ensemble structuré de données (300), dans lequel l'ensemble structuré de données comprend une pluralité de chaînes de texte (304) et une séquence de données numériques (306), dans lequel l'ensemble structuré de données inclut une pluralité de couches de données (320, 322, 324), et dans lequel l'ensemble structuré de données est au format de langage de balisage extensible ;

le formatage de l'ensemble structuré de données de sorte que l'ensemble structuré de données soit réduit en taille, dans lequel le formatage de l'ensemble structuré de données comprend :

l'affectation d'une de la séquence de données numériques comme un élément numérique de référence (412, 414), et dans lequel la séquence de données numériques subséquente à l'élément numérique de référence est remplacée par un différentiel numérique (416, 418) de l'élément numérique de référence ;

la séquence de données numériques comprenant une pluralité d'éléments numériques, dans lequel la séquence de données numériques a une plage de valeurs correspondante ;

la conversion de chacun des éléments numériques en au moins un entier (452) ;

le mappage du au moins un entier dans la plage de valeurs correspondante ;

la conversion de la séquence de données numériques en un format de base numérique alternatif (516) ; et

le codage de l'ensemble structuré de données formaté pour la transmission au noeud de communications distant de sorte que l'ensemble structuré de données soit réduit en taille, dans lequel le codage comprend la conversion de l'ensemble structuré de données en un format binaire.

2. Procédé selon la revendication 1, dans lequel le formatage de l'ensemble structuré de données comprend l'affectation d'un numéro d'identification à une ou plusieurs de la pluralité de chaînes de texte, et dans lequel le numéro d'identification remplace une ou plusieurs de la pluralité de chaînes de texte.

3. Procédé selon la revendication 1, dans lequel la séquence de données numériques subséquente à l'élément numérique de référence est remplacée par un différentiel numérique d'un différentiel numérique précédent.

4. Procédé selon la revendication 1, dans lequel le formatage de l'ensemble structuré de données comprend en outre une pluralité de balises, et dans lequel le formatage comprend le remplacement d'une ou plusieurs de la pluralité de balises par un modèle.

5. Procédé selon la revendication 4, dans lequel la pluralité de balises comprend en outre une structure répétitive de balises, et dans lequel le formatage comprend le remplacement de la structure répétitive de balises par le modèle.

6. Procédé selon la revendication 1, dans lequel la pluralité de chaînes de texte est composée d'une pluralité de caractères, et dans lequel l'étape de formatage comprend les étapes consistant à :

affecter une valeur numérique à chacun de la pluralité de caractères, dans lequel chaque caractère unique de la pluralité de caractères a une valeur numérique unique ;
affecter un de la pluralité de caractères comme un élément de caractère de référence ;et
remplacer la pluralité de caractères subséquente à l'élément de caractère de référence par un différentiel numérique de l'élément de caractère de référence.

FIG. 1

FIG. 2

REMOTE
COMMUNICATIONS NODE(S)

108

REGIONAL NODE(S)

104

144

168

166

167

121

PROCESSOR

175

TRANSMITTER /
RECEIVER

176

TRANSMITTER /
RECEIVER

135

LOCAL NODE CONTROL
ALGORITHMS

146

LOCAL NODE
MEMORY

148

TERRESTRIAL LINKS
TO OTHER LOCAL NODES
AND REGIONAL NODES

106

FIG. 3

LOCAL NODE(S)

106

REGIONAL NODE(S)

104

171

168

170

169

123

PROCESSOR

175

TRANSMITTER /
RECEIVER

178

TRANSMITTER /
RECEIVER

135

REGIONAL NODE
CONTROL ALGORITHMS

150

REGIONAL NODE
MEMORY

152

TERRESTRIAL LINKS
TO OTHER LOCAL NODES
AND REGIONAL NODES

104

FIG.4

*FIG. 5*

```
320   <VISIT_LOCATION TYPE="ORIGIN">
          <LOCATION>
              <ADDRESS>
                  <STREET_ADDRESS> 6445 S MAPLE AVE </STREET_ADDRESS>
              </ADDRESS>                                      308
          </LOCATION>
      </VISIT_LOCATION>

322   <VISIT_LOCATION TYPE="DESTINATION">
          <LOCATION>
              <ADDRESS>
                  <STREET_ADDRESS> 2419 W 14TH ST </STREET_ADDRESS>
              </ADDRESS>
          </LOCATION>
      </VISIT_LOCATION>

      <ROUTE_LINK>
          <SEGMENT>
                                    302
              <SHAPE_POINT)      302    306
                  <POSITION>
324                   <LATITUDE> 33.36338993 </LATITUDE>
                      <LONGITUDE> -111.93896 </LONGITUDE>
                  </POSITION>                        308
              </SHAPE_POINT)

              <SHAPE_POINT)
                  <POSITION>          306
                      <LATITUDE> 33.36173995 </LATITUDE>
                      <LONGITUDE> -111.93919 </LONGITUDE>
                  </POSITION>                        304
              </SHAPE_POINT)

301           <SHAPE_POINT)
                  <POSITION>          306        304
                      <LATITUDE> 33.36178999 </LATITUDE>
                      <LONGITUDE> -111.93918 </LONGITUDE>
                  </POSITION>                310
              </SHAPE_POINT)

              <SHAPE_POINT)
                  <POSITION>          306
                      <LATITUDE> 33.36336998 </LATITUDE>
                      <LONGITUDE> -111.93896 </LONGITUDE>
                  </POSITION>
              </SHAPE_POINT)
          </SEGMENT>                              300
      </ROUTE_LINK>
```

*FIG. 6*

```
<SHAPE_POINT)
        <POSITION>                          412
                <LATITUDE> 33.36338993 </LATITUDE>
                <LONGITUDE> -111.93896 </LONGITUDE>
        </POSITION>                     414
</SHAPE_POINT)

<SHAPE_POINT)
        <POSITION>          416
                <DLAT> -5.939 </DLAT>
                <DLON> -0.828 </DLON>
        </POSITION>             418
</SHAPE_POINT)

<SHAPE_POINT)
        <POSITION>           416
                <DLAT> -5.759 </DLAT>
                <DLON> -0.792 </DLON>
        </POSITION>            418
</SHAPE_POINT)

<SHAPE_POINT)
        <POSITION>            416
                <DLAT> -0.071 </DLAT>
                <DLON> -0.000 </DLON>
        </POSITION>           418
</SHAPE_POINT)
```

<u>400</u>

# FIG. 7

```
<SHAPE_POINT)
        <POSITION>                          452
                <ILATITUDE> 398040746 </ILATITUDE>
                <ILONGITUDE> -1335483812 </ILONGITUDE>
        </POSITION>
</SHAPE_POINT)

<SHAPE_POINT)
        <POSITION>              452
                <IDLAT> -1081 </IDLAT>
                <IDLON> -150 </IDLON>
        </POSITION>
</SHAPE_POINT)

<SHAPE_POINT)
        <POSITION>              452
                <IDLAT> -1048 </IDLAT>
                <IDLON> -144 </IDLON>
        </POSITION>
</SHAPE_POINT)

<SHAPE_POINT)
        <POSITION>              452
                <IDLAT> -13 </IDLAT>
                <IDLON> 0 </IDLON>
        </POSITION>
</SHAPE_POINT)
```

·450

# FIG. 8

```
<SHAPE_POINT)
        <POSITION>                          516
                <B128ILAT> 1>>a>> § </B128ILAT>
                <B128ILON> -4Uae </B128ILON>
        </POSITION>
</SHAPE_POINT)

<SHAPE_POINT)
        <POSITION>              516
                <B128IDLAT> -8 • </B128IDLAT>
                <B128IDLON> -1M </B128IDLON>
        </POSITION>
</SHAPE_POINT)

<SHAPE_POINT)
        <POSITION>              516
                <B128IDLAT> -80 </B128IDLAT>
                <B128IDLON> -1G </B128IDLON>
        </POSITION>
</SHAPE_POINT)

<SHAPE_POINT)
        <POSITION>              516
                <B128IDLAT> -D </B128IDLAT>
                <B128IDLON> 0 </B128IDLON>
        </POSITION>
</SHAPE_POINT)
```

500

# FIG. 9

```
          552
<13>

        <14>

                <17> 1>>å>>§ </17>
                <18> -4Ûœe¹; </18>
        </14>                        552
</13>

<13>

        <14>

                <19> -8 • </19>
                <20> -1M </20>
        </14>
</13>

<13>
                        552
        <14>
                <19> -80 </19>
                <20> -1G </20>
        </14>
</13>

<13>
                        552
        <14>
                <19> -D </19>
                <20> 0 </20>
        </14>
</13>
```

550

# FIG. 10

601 — TEMPLATEID=8 — 605 — 602
    `<SHAPE_POINT>` — 602
      `<POSITION>`
        `<ILATITUDE> @1 </ILATITUDE>`
        `<ILONGITUDE> @2 </ILONGITUDE>`
      `</POSITION>`
     `</SHAPE_POINT)` ≻ 602
            604

610 — TEMPLATEID=9 — 614 — 602
    `<SHAPE_POINT>` — 602
      `<POSITION>` — 602
        `<IDLAT> @1 </IDLAT>`
        `<IDLON> @2 </IDLON>`
      `</POSITION>` — 602
     `</SHAPE_POINT)` ≻ 602
            604

    `<TEMPLATEID=8>`
      398040746 — 652
      -1335483812
    `</TEMPLATE>`

    `<TEMPLATEID=9>`
      -1081 — 652
      -150
    `</TEMPLATE>`

    `<TEMPLATEID=9>`
      -1048 — 652
      -144
    `</TEMPLATE>`

    `<TEMPLATEID=9>`
      -13 — 652
      0
    `</TEMPLATE>`

<u>600</u>

# FIG. 11

## FIG. 12

START

692 — CONVERT SET OF CONTENT DATA TO STRUCTURED SET OF DATA

694 — FORMAT STRUCTURED SET OF DATA SUCH THAT STRUCTURED SET OF DATA IS REDUCED IN SIZE

696 — ENCODE STRUCTURED SET OF DATA SUCH THAT STRUCTURED SET OF DATA IS REDUCED IN SIZE

698 — TRANSMIT STRUCTURED SET OF DATA TO REMOTE COMMUNICATIONS NODE

END

ORIGINAL CONTENT DATA ―702

↓

CONVERT TO STRUCTURED SET OF DATA ―704

↓

ASSIGN A NUMERICAL OR CHARACTER REFERENCE ELEMENT AND REPLACE SUBSEQUENT NUMERICAL OR CHARACTER DATA WITH NUMERICAL DIFFERENTIAL ―706

↓

CONVERT NUMERICAL ELEMENTS TO INTEGERS AND MAP TO A CORRESPONDING RANGE OF VALUES ―708

↓

CONVERT SEQUENCE OF NUMERICAL DATA TO ALTERNATE NUMERICAL BASE FORMAT ―710

↓

ASSIGN IDENTIFICATION NUMBER TO PLURALITY OF TEXT STRINGS ―712

↓

REPLACE PLURALITY OF TAGS WITH A TEMPLATE ―714

↓

CONVERT TO BINATY ―716

↓

TRANSMIT TO REMOTE COMMUNICATIONS NODE ―718

700

# FIG. 13